# EUROPEAN PATENT APPLICATION

(11) **EP 2 026 329 A1**
(43) Date of publication of application: **18.02.2009**
(21) Application number: 07744177.2
(22) Date of filing: 21.05.2007
(51) Int. Cl.: G10L 17/00, H04M 3/56, H04R 1/40, H04R 3/00

(54) **SPEECH SITUATION DATA CREATING DEVICE, SPEECH SITUATION VISUALIZING DEVICE, SPEECH SITUATION DATA EDITING DEVICE, SPEECH DATA REPRODUCING DEVICE, AND SPEECH COMMUNICATION SYSTEM**

(30) Priority: 25.05.2006 JP 2006145696
(71) Applicant: YAMAHA CORPORATION, Naka-ku Hamamatsu-shi Shizuoka 430-8650 (JP)
(72) Inventor: HATA, Toshiyuki, Hamamatsu-shi, Shizuoka 430-8650 (JP)
(74) Representative: Wagner, Karl H.
(86) International application number: PCT/JP2007/060743
(87) International publication number: WO 2007/139040

(57) **Abstract**

A voice situation data creating device for providing the user with data with a good convenience for the user when the user uses voice data collected from sound sources and recorded with time. A direction/talker identifying section (3) of a control unit (1) observes a variation of direction data acquired from voice communication data and sets single-direction data and combination direction data on a combination of directions in talker identification data if no variation of the direction data indicating a single direction or direction data indicating directions over a predetermined time occurs. If any variation of the direction data occurs within a predetermined time, the direction/talker identifying section (3) reads voice feature value data Sc from a talker's voice DB (53), identifies the talker by comparing the voice feature value data Sc with the voice feature value analyzed by a voice data analyzing section (2), sets talker name data in the talker identification data if the talker is identified, and sets direction undetection data in the talker identification data if the talker is not identified. A voice situation data creating section (4) creates voice situation data according to the variation with time of the talker identification data.

## Description

### Technical Field

The present invention relates to a voice situation data creating device, a voice situation visualizing device, a voice situation data editing device, a voice data reproducing device, and a voice communication system, each of which is for recording and utilizing conference voices or other voices.

### Background Art

Conventionally, there have been devised a variety of voice conference systems for holding a voice conference between multipoints connected via a network (see, for example, Japanese Laid-open Patent Publication No. 2005-80110 and Japanese Patent Publication No. 2816163).

Such a voice conference system includes voice conference devices disposed at locations (conference rooms) between which a conference is held, and one or more conference participants are present around each of the voice conference devices. Each voice conference device picks up a conference participant's voice in the conference room where it is disposed, converts the picked-up voice into voice data, and transmits the voice data to each counterpart voice conference device via the network. Each voice conference device also receives voice data from each counterpart voice conference device, converts the received voice data into voice sounds, and emits the voice sounds.

Japanese Laid-open Patent Publication No. 2005-80110 discloses a voice conference system including RFID tags and microphones each disposed in the vicinity of a corresponding one of conference participants. When a sound is picked up by any of the microphones, a voice conference device associates a picked-up voice signal with conference participant information obtained by the corresponding RFID tag, and transmits the voice signal along with the conference information associated therewith.

The voice conference system also includes a sound recording server, and the conference participant information is associated with the picked-up voice signal stored in the server.

Japanese Patent Publication No. 2816163 discloses a talker verification method in which a voice conference device performs processing for dividing an input voice signal on a predetermined time period unit basis and for detecting a talker based on a feature value of each voice segment.

With the voice communication system disclosed in Japanese Laid-open Patent Publication No. 2005-80110, conference participant information associated with a picked-up voice signal is displayed when one of the conference participants connects a personal computer or the like with the sound recording server and reproduces recorded voice data in order to prepare a conference minutes or the like after the conference.

However, with the voice communication system disclosed in Japanese Laid-open Patent Publication No. 2005-80110, the voice data are stored in the sound recording server simply in time series, and therefore each conference participant becomes able to be determined only after corresponding voice data is selected. Therefore, it is not easy to extract voices of a particular conference participant and grasp the entire flow (situation) of the conference recorded.

Furthermore, editing such as separating the voice data into segments based on a voice situation (conference situation) obtained from the voice data or conference information cannot be performed, and the voice situation cannot be stored.

It is therefore hard for the user to use, after the conference or the like, the voice data stored in the sound recording server.

With the talker verification method disclosed in Japanese Patent Publication No. 2816163, transmission to a destination must be carried out while analyzing talkers' voices, and processing load is therefore large. If the voice analysis is simplified in order to reduce the load, the accuracy of talker detection is lowered, resulting in difficulty in acquiring accurate talker information.

It is an object of the present invention to provide a voice situation data creating device, a voice situation visualizing device, a voice situation data editing device, a voice data reproducing device, and a voice communication system, which are capable of detecting talker identification information relating to voice data and storing the same in association with the voice data with simple processing, thereby providing, in a way convenient for the user, data in which the voice data from a plurality of sound sources are recorded in time series and which is utilized, for example, for preparation of conference minutes after a multipoint voice conference.

### Disclosure of Invention

To attain the above object, according to a first aspect of the present invention, there is provided a voice situation data creating device comprising data acquisition means for acquiring in time series voice data and direction data that represents a direction of arrival of the voice data, a talker's voice feature database that stores voice feature values of respective talkers, direction/talker identifying means for setting the direction data, which is single-direction data, in talker identification data when the acquired direction data indicates a single direction and remains unchanged for a predetermined time period, the direction/talker identifying means being for setting the direction data, which is combination direction data, in the talker identification data when the direction data indicates a same combination of plural directions and remains unchanged for a predetermined time period, the direction/talker identifying means being for extracting a voice feature value from the voice data and comparing the extracted voice feature value with the voice feature values to thereby perform talker identification when the talker identification data is neither the single-direction data nor the combination direction data and for setting, if a talker is identified, talker name data corresponding to the identified talker in the talker identification data and for setting, if a talker is not identified, direction undetection data in the talker identification data, voice situation data creating means for creating voice situation data by analyzing a time distribution of a result of determination on the talker identification data, and storage means for storing the voice data and the voice situation data.

With the above construction, talker identification is first performed based on direction data and talker identification is then performed based on a voice feature value. Thus, the talker identification can be carried out more simply and accurately, as compared to a case where the analysis is performed solely on the voice feature value.

Specifically, in the case of voice conference minutes preparation, talker information can relatively easily be obtained and stored in association with voice content (voice data). When these data are utilized by a minutes preparer after the conference, each conference participant is identified based on direction data and talker name data, and talking time is identified based on time data. It is therefore possible to easily identify timing of talking irrespective of whether the number of talkers is one or more and irrespective of whether the one or more talkers move. A talking situation during the entire conference (conference flow) can also easily be identified.

According to a preferred aspect of the present invention, the direction/talker identifying means renews, as needed, the talker's voice database based on a voice feature value obtained from a talker's voice which is input during communication.

With this construction, the talker's voice feature database can be constructed by being renewed and stored, even if the database is not constructed in advance.

According to a second aspect of the present invention, there is provided a voice situation visualizing device comprising the voice situation data creating device according to the present invention, and display means for graphically representing a time distribution of the voice data in time series on a talker basis based on the voice situation data and for displaying the graphically represented time distribution.

With this construction, time-based segmented voice data is graphically displayed in time series by the display means on a direction basis and on a talker basis, whereby a voice situation is visually provided to the user. Specifically, the display means includes a display device such as a liquid crystal display, and includes a control unit and a display application which are for displaying an image on the display device. When the display application is executed by the control unit, segmented voice data into which the entire voice data is segmented in time series on a direction basis and on a talker basis is displayed in the form of a time chart based on voice situation data. Thus, the voice situation is more plainly provided to the user.

Specifically, in the case of the voice conference minutes preparation, conference participant's talking timings and talking situations during the entire conference are displayed, e.g., in the form of a time chart, thereby being visually provided to the minutes preparer. As a result, talking situations, etc. during the conference is more plainly provided to the minutes preparer.

According to a third aspect of the present invention, there is provided a voice situation data editing device comprising the voice situation visualizing device according to the present invention, operation acceptance means for accepting an operation input for editing the voice situation data, and data edit means for analyzing a content of edit accepted by the operation acceptance means and editing the voice situation data.

With this construction, respective items of the voice situation data are changed by the data edit means. At this time, a user's operation is accepted by the operation acceptance means. In a case for example that a relation between direction and talker is known, the user wishing to change a direction name to a talker's name performs an operation for changing the direction name by means of the operation acceptance means. The operation acceptance means accepts the user's operation and provides the same to the data edit means. The data edit means has a data edit application, causes the control unit to execute the data edit application to thereby change the direction name to the talker's name in accordance with the instructed content, and renews and records the voice situation data.

Specifically, in the case of the voice conference minutes preparation, an operation, e.g., for changing a direction name to a conference participant's name can be carried out. As a result, the conference participant's name is displayed instead of the direction name that does not directly indicate the conference participant, making it possible to prepare more understandable minutes.

According to a fourth aspect of the present invention, there is provided a voice data reproducing device comprising the voice situation data editing device according to the present invention, and reproducing means for selecting and reproducing talker's voice data selected by the operation acceptance means from all voice data.

With this construction, when segmented voice data is selected by operating the operation acceptance means, the selected segmented voice data is reproduced by the reproducing means. Thus, the segmented voice data can be heard again after the conference. At the time of editing, the talker identification can auditorily be performed by listening to sounds reproduced based on segmented voice data.

Specifically, in the case of the voice conference minutes preparation, each individual conference participant can auditorily be identified and which conference participant talks of what can reliably be determined even after the conference by selecting and reproducing segmented voice data.

According to a fifth aspect of the present invention, there is provided a voice communication system including a plurality of sound emission/pickup devices for communicating voice data therebetween via a network, wherein any of the voice situation data creating device, the voice situation visualizing device, the voice situation data editing device, and the voice data reproducing device according to the present invention is separate from the plurality of sound emission/pickup devices and is connected to the network, and the data acquisition means acquires voice data and direction data which are communicated between the plurality of sound emission/pickup devices.

With this construction, voice data picked up by each sound emission/pickup device is input via the network to the voice situation data creating device, the voice situation visualizing device, the voice situation data editing device, and the voice data reproducing device (hereinafter collectively referred to as the voice data processing device). Since the sound emission/pickup device and the voice data processing device are constructed separately from one another, the voice data processing device requiring massive storage capacity is not necessary to be installed onto the sound emission/pickup device which is required to be relatively small in size.

According to a sixth aspect of the present invention, there is provided a voice communication system including a plurality of sound emission/pickup devices for communicating voice data therebetween via a network, wherein any of the voice situation data creating device, the voice situation visualizing device, the voice situation data editing device, and the voice data reproducing device according to the present invention is incorporated in any of the plurality of sound emission/pickup devices, and the data acquisition means acquires voice data and direction data which are transmitted to and received by the sound emission/pickup device that incorporates a voice data processing device.

With this construction, the voice data processing device is provided in the sound emission/pickup device, and therefore, voice communication can be recorded without a server.

According to a preferred aspect of this invention, the sound emission/pickup device includes a microphone array, generates a plurality of picked-up sound beam signals having strong directivities in different directions based on voice signals picked up by microphones of the microphone array, compares the plurality of picked-up sound beam signals with one another to select the picked-up sound beam signal having a highest signal intensity, detects a direction corresponding to the selected picked-up sound beam signal, and outputs the selected picked-up sound beam signal and the detected direction respectively as voice data and direction data.

With this construction, the sound emission/pickup device generates a plurality of picked-up sound beam signals based on voice signals picked up by the microphones of the microphone array, selects the picked-up sound beam signal having the highest signal intensity, and detects the direction corresponding to this picked-up sound bean signal. Then, the sound emission/pickup device outputs the selected picked-up sound beam signal and the detected direction respectively as voice data and direction data. Thus, unlike the prior art, RFID tags or the like for identifying conference participants are not required, and therefore the voice communication system can be constructed more simply. Since voice feature value-based processing is not carried out, the load for identification can be reduced, and since the direction information is used, the accuracy of identification can be improved.

### Brief Description of Drawings

FIG. 1 is a view schematically showing the construction of a conference minutes preparation system according to one embodiment of this invention;
FIG. 2 is a block diagram showing the primary construction of a voice conference device in FIG. 1;
FIG. 3 is a block diagram showing the primary construction of a sound recording server in FIG. 1;
FIG. 4 is a schematic view showing the construction of a talker's voice DB;
FIG. 5 is a flowchart showing a sound recording process flow in the sound recording server in FIG. 1;
FIG. 6A is a view showing a state where a talker A at a location a talks, and FIG. 6B is a view showing a state where talkers A, E at the location a simultaneously talk;
FIG. 7 is a view showing a state where the talker E at the location a talks while moving;
FIG. 8 is a conceptual view of voice files and voice situation data recorded in the sound recording server in FIG. 1;
FIG. 9 is a structural view of a voice communication system at the time of conference minutes preparation;
FIG. 10 is a block diagram showing the primary construction of a sound recording server and a personal computer in FIG. 9;
FIG. 11A is a view showing an example of an initial display image displayed in a display section of the personal computer when an edit application is executed, and FIG. 11B is a view showing an example of an edited display image;
FIGS. 12A and 12B are views showing other examples of the initial display image at execution of the edit application;
FIG. 13A is a schematic view showing the construction of a talker's voice DB including direction data, and FIG. 13B is a view showing an example of edit screen with which the talker's voice DB in FIG. 13A is used;
FIG. 14 is a block diagram showing the primary construction of a personal computer additionally functioning as a sound recording server; and
FIG. 15 is a block diagram showing the construction of a voice conference device incorporating a sound recording server.

### Best Mode for Carrying Out the Invention

In the following embodiment, a description will be given of a conference minutes preparation system as a concrete example system.

With reference to the drawings, the conference minutes preparation system according to the embodiment of this invention will be described.

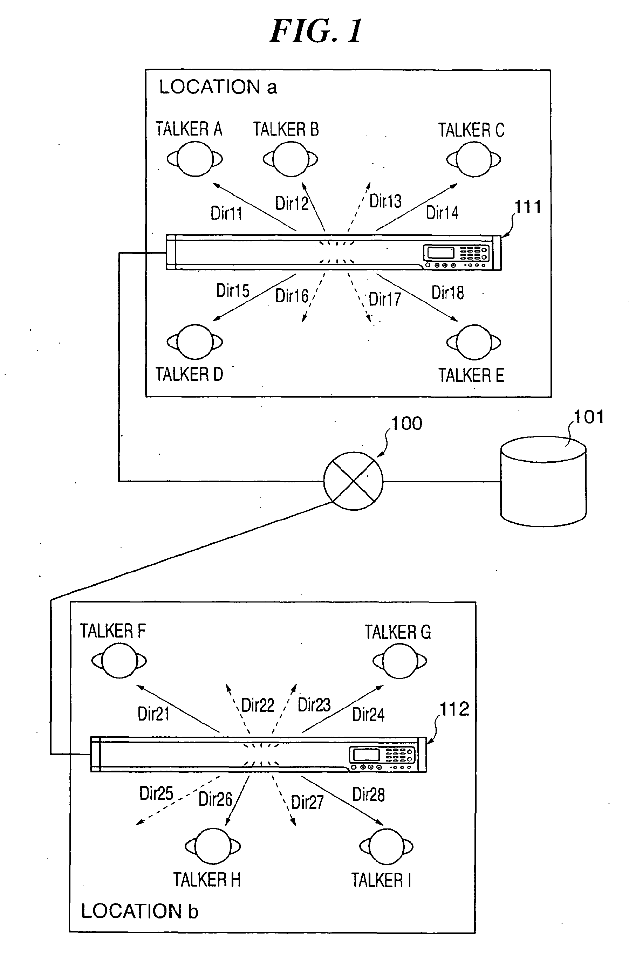

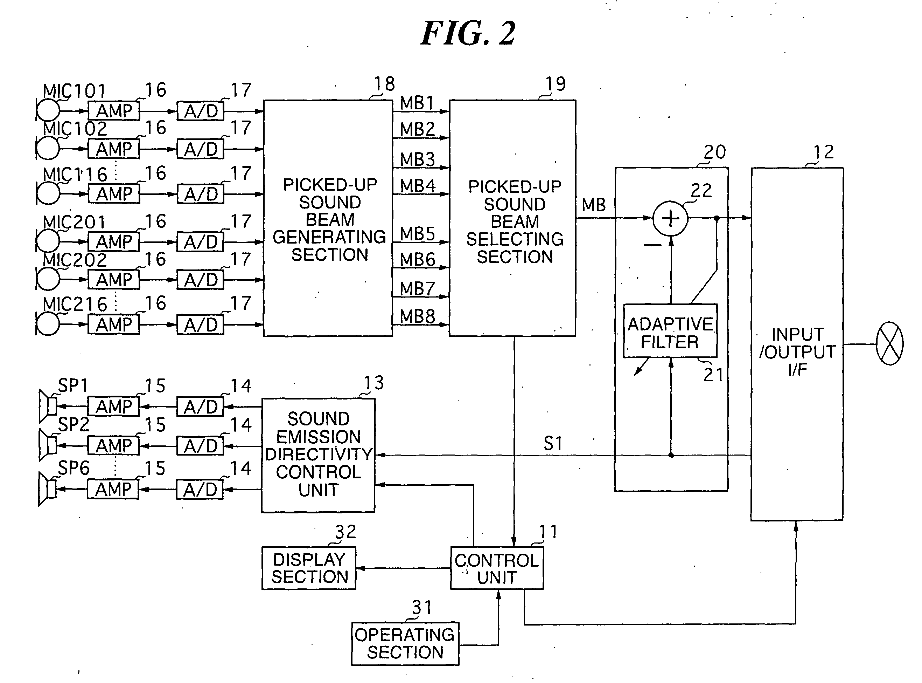

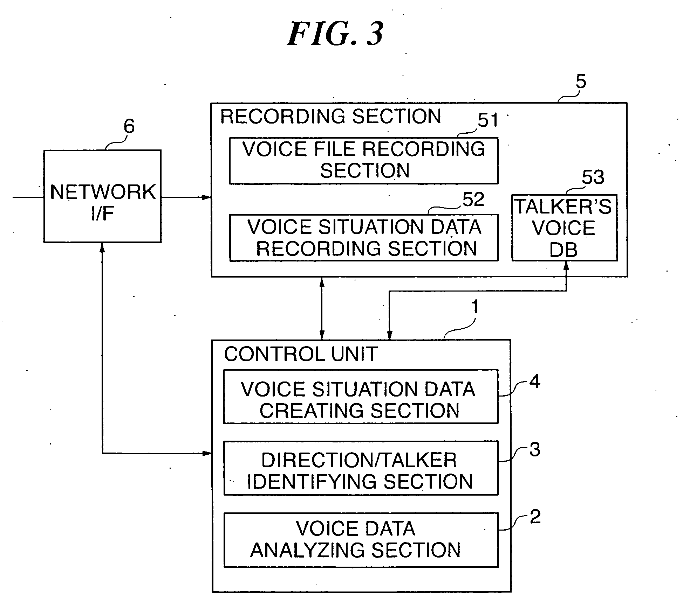

FIG. 1 is a view schematically showing the construction of the conference minutes preparation system of this embodiment. FIG. 2 is a block diagram showing the primary construction of voice conference devices 111, 112 in FIG. 1. FIG. 3 is a block diagram showing the primary construction of a sound recording server 101 in FIG. 1.

The conference minutes preparation system of this embodiment includes the voice conference devices 111, 112 and the sound recording server 101, which are connected to a network 100.

The voice conference devices 111, 112 are respectively disposed at location a and location b which are at a distance from each other. At the location a, the voice conference device 111 is disposed, and five talkers A to E are respectively present in the directions of Dir11, Dir12, Dir14, Dir15 and Dir18 with respect to the voice conference device 111 so as to surround the voice conference device 111. At the location b, the voice conference device 112 is disposed, and four conference participants F to I are respectively present in the directions of Dir21, Dir24, Dir26 and Dir28 with respect to the voice conference device 112 so as to surround the voice conference device 112.

As shown in FIG. 2, the voice conference devices 111, 112 each include a control unit 11, an input/output I/F 12, a sound emission directivity control unit 13, D/A converters 14, sound emission amplifiers 15, speakers SP1 to SP16, microphones MIC101 to 116 or 201 to 216, sound pickup amplifiers 16, A/D converters 17, a picked-up sound beam generating section 18, a picked-up sound beam selecting section 19, an echo cancellation circuit 20, an operating section 31, and a display section 32. The control unit 11 controls the entire voice conference device 111 or 112. The input/output I/F 12 is connected to the network 100, converts a voice file input from the counterpart device via the network 100, which is network format data, into a general voice signal, and outputs the voice signal via the echo cancellation circuit 20 to the sound emission directivity control unit 13. At this time, the control unit 11 acquires direction data attached to the input voice signal, and performs sound emission control on the sound emission directivity control unit 13.

In accordance with a content of the sound emission control, the directivity control unit 13 generates sound emission voice signals for the speakers SP1 to SP16. The sound emission voice signals for the speakers SP1 to SP16 are generated by performing signal control processing such as delay control and amplitude control on the input voice data. The D/A converters 14 each convert the sound emission voice signal of digital form into an analog form, and the sound emission amplifiers 15 amplify the sound emission voice signals and supply the amplified signals to the speakers SP1 to SP16. The speakers SP1 to SP16 perform voice conversion on the sound emission voice signals and emit sounds. As a result, voices of conference participants around the counterpart device connected via the network are emitted toward conference participants around the voice conference device.

The microphones MIC101 to 116 or 201 to 216 pick up surrounding sounds including voice sounds of conference participants around the voice conference device, and convert the picked-up sounds into electrical signals to generate picked-up voice signals. The sound pickup amplifiers 16 amplify the picked-up voice signals, and the A/D converters 17 sequentially convert the picked-up voice signals of analog form into a digital form at predetermined sampling intervals.

The picked-up sound beam generating section 18 performs delay processing, etc. on the sound signals picked up by the microphones MIC101 to 116 or 201 to 216 to thereby generate picked-up sound beam voice signals MB1 to MB8 each having a strong directivity in a predetermined direction. The picked-up sound beam voice signals MB1 to MB8 are set to have strong directivities in different directions. Specifically, settings in the voice conference device 111 in FIG. 1 are such that the signals MB1, MB2, MB3, MB4, MB5, MB6, MB7 and MB8 have strong directivities in the directions of Dir11, Dir12, Dir13, Dir14, Dir15, Dir16, Dir17 and MB8, respectively. On the other hand, settings in the voice conference device 112 are such that the signals MB1, MB2, MB3, MB4, MB5, MB6, MB7 and MB8 have strong directivities in the directions of Dir21, Dir22, Dir23, Dir24, Dir25, Dir26, Dir27 and Dir28, respectively.

The picked-up sound beam selecting section 19 compares the signal intensities of the picked-up sound beam voice signals MB1 to MB8 with one another to thereby select the picked-up sound beam voice signal having the highest intensity, and outputs the selected signal as a picked-up sound beam voice signal MB to the echo cancellation circuit 20. The picked-up sound beam selecting section 19 detects a direction Dir corresponding to the selected picked-up sound beam voice signal MB, and notifies the control unit 11 of the detected direction. The echo cancellation circuit 20 causes an adaptive filter 21 to generate a pseudo regression sound signal based on the input voice signal, and causes a post processor 22 to subtract the pseudo regression sound signal from the picked-up sound beam voice signal MB, thereby suppressing sounds being diffracted from the speakers SP to the microphones MIC. The input/output I/F 12 converts the picked-up sound beam voice signal MB supplied from the echo cancellation circuit 20 into a voice file of network format having a predetermined data length, and sequentially outputs, to the network 100, the voice file to which direction data and picked-up sound time data obtained from the control unit 11 are attached. Transmitted data including the voice file, the direction data, the picked-up sound time data, and device data representing the voice conference device will be referred to as the communication voice data.

With the above arrangement, a multipoint conference can be carried out by means of the voice conference devices 111, 112 connected via the network 100.

The sound recording server 101 includes a control unit 1, a recording section 5, and a network I/F 6. The sound recording server 101 may be disposed at a location which is the same as either one of or different from both of the locations where the voice conference devices 111, 112 are respectively disposed.

The control unit 1 includes a voice data analyzing section 2, a direction/talker identifying section 3, and a voice situation data creating section 4, and performs control on the entire sound recording server 101 such as network communication control on the network I/F 6 and recording control on the recording section 5. The control unit 1 is comprised, for example, of an arithmetic processing chip, a ROM, a RAM which is an arithmetic memory, etc., and executes a voice data analyzing program, a direction/talker identifying program, and a voice situation data creating program, which are stored in the ROM, thereby functioning as the voice data analyzing section 2, the direction/talker identifying section 3, and the voice situation data creating section 4.

The voice data analyzing section 2 acquires via the network I/F6 and analyzes the communication voice data communicated between the voice conference devices. The voice data analyzing section 2 acquires a voice file, picked-up sound time data, direction data, and device data from the communication voice data.

Based on a change in direction data during a predetermined time period, the direction/talker identifying section 3 supplies the as-acquired direction data and talker name data or supplies direction undetection data to the voice situation data creating section 4.

Based on a time-based variation in the supplied direction data, the talker name data, and the direction undetection data, the voice situation data creating section 4 generates voice situation data in association with a relevant part of the voice file.

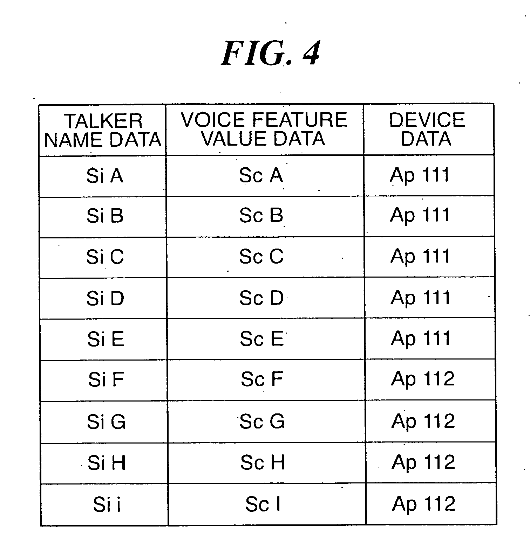

Concrete contents of processing by the voice data analyzing section 2, the direction/talker identifying section 3, and the voice situation data creating section 4, i.e., contents of processing by the control unit 1, will be described later with reference to FIG. 4.

The recording section 5 is comprised of a large-capacity hard disk unit or the like, and includes a voice file recording section 51, a voice situation data recording section 52, and a talker's voice DB 53. The voice file recording section 51 sequentially records voice files acquired by the voice data analyzing section 2, and the voice situation data recording section 52 sequentially records voice situation data created by the voice situation data creating section 4.

In the talker's voice DB 53, voice feature values of conference participants (talkers) attending to the communication conference are databased and stored.

FIG. 4 is a schematic view showing the construction of the talker's voice DB 53 in FIG. 3.

As shown in FIG. 4, the talker's voice DB 53 stores talker name data Si, voice feature value data Sc, and device data Ap, which are associated with one another. In the case, for example, of the conference shown in FIG. 1, there are stored talker name data SiA to SiE assigned to respective ones of the talkers A to E present at the location a and device data Ap111 assigned to the voice conference device 111. Then, voices of the talkers A to E are analyzed to obtain voice feature values (formants or the like), and the voice feature values are stored as voice feature value data ScA to ScE so as to correspond to respective ones of the talkers A to E (talker name data SiA to SiE). There are also stored talker name data SiF to SiI respectively assigned to the talkers F to I present at the location b and device data Ap112 assigned to the voice conference device 112. Voice feature values (formants or the like) obtained by analyzing voices of the talkers F to I are stored as voice feature value data ScF to ScI so as to respectively correspond to the talkers F to I (talker name data SiF to SiI).

The above described associations can be realized by registering talkers' names and voice sounds individually spoken by the conference participants before the conference. The associations can also be realized by renewing and recording the talker's voice DB 53 by automatically associating the talker name data Si with the voice feature value data Sc in sequence by the voice data analyzing section 2 of the sound recording server 101 during the conference.

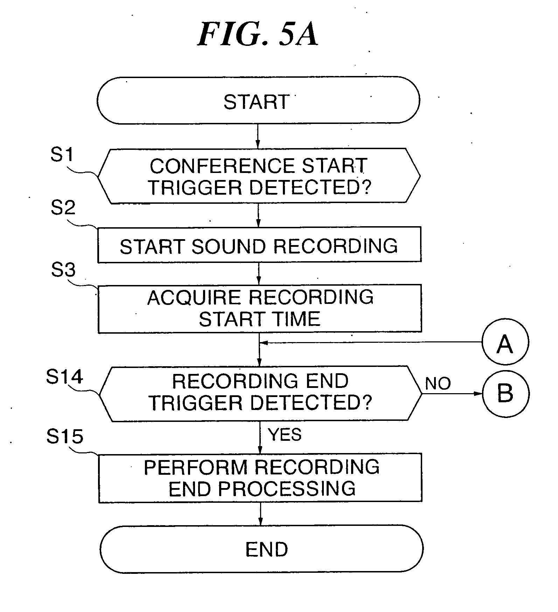

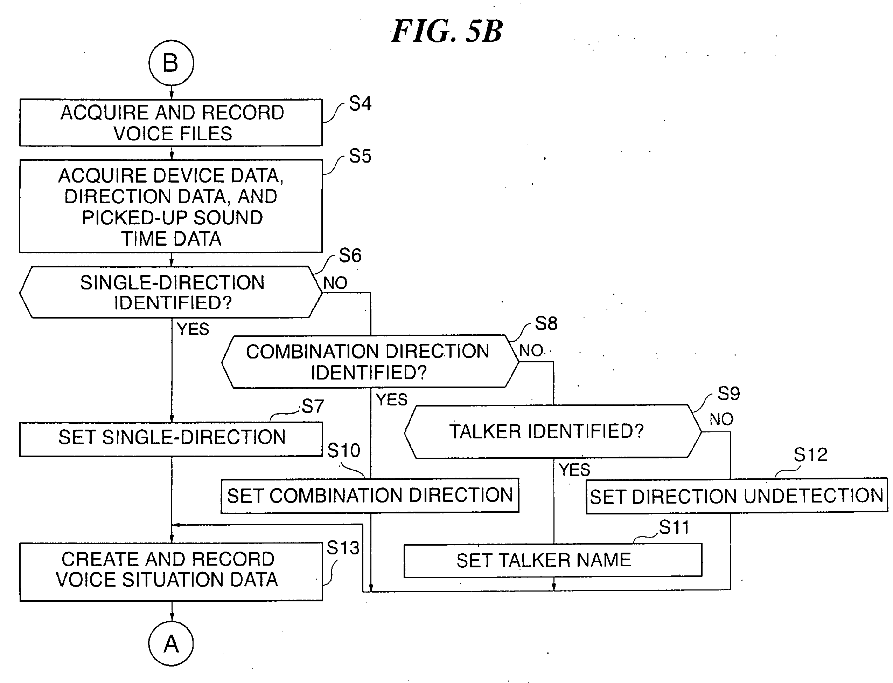

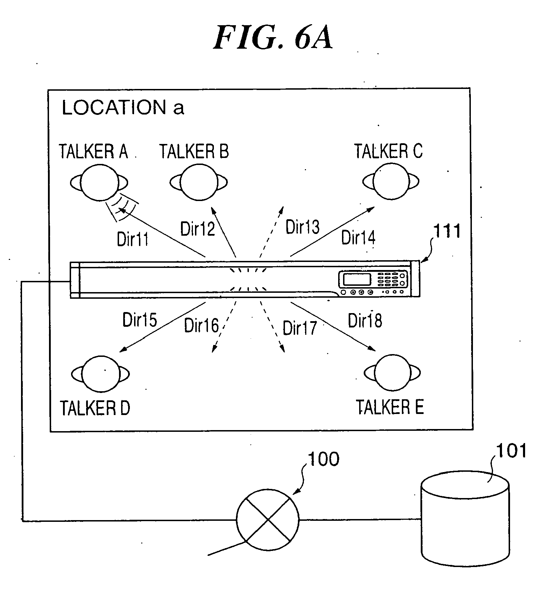

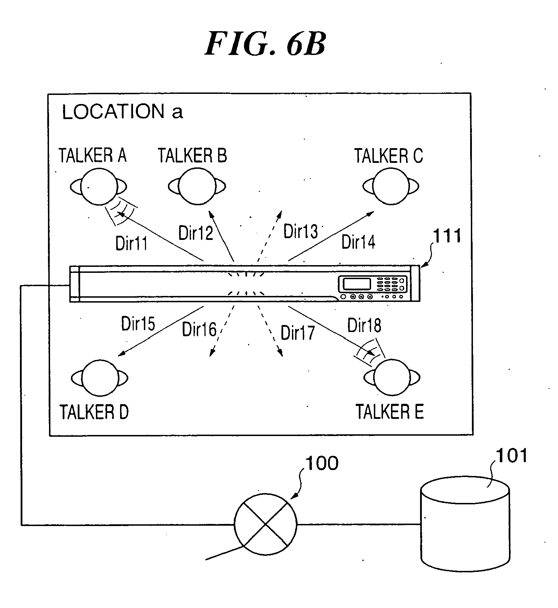

Next, with reference to FIGS. 5 and 6, the flow of sound recording by the sound recording server 101 will be described.

FIG. 5 is a flowchart showing the sound recording processing flow in the sound recording server 101 in FIG. 1. FIG. 6A is a view showing a state where the talker A at the location a talks, and FIG. 6B is a view showing a state where the talkers A and E at the location a simultaneously talk.

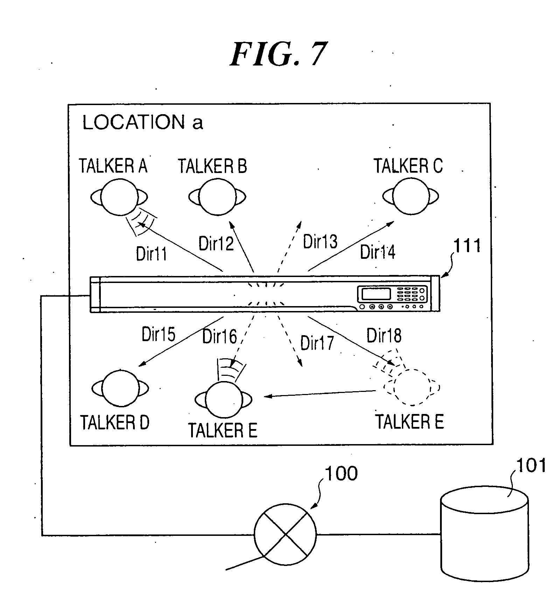

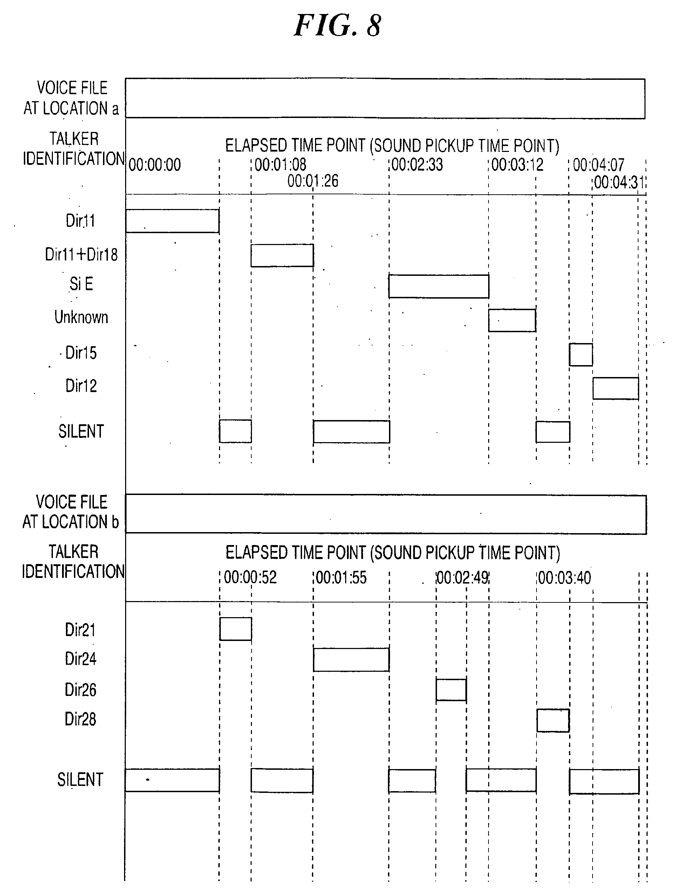

FIG. 7 is a view showing a state where the talker E at the location a talks while moving. FIG. 8 is a conceptual view of voice files and voice situation data recorded in the sound recording server 101 in FIG. 1.

The sound recording server 101 monitors communication voice data in the network 100, and starts sound recording when detecting a conference start trigger (S1 → S2). At this time, the conference start trigger is obtained by detecting that the communication voice data is transmitted to and received by the network 100. For example, the conference start trigger is obtained by the sound recording server 111 by detecting a conference start pulse generated by the voice conference device 111 or 112 when a conference start switch is depressed. The conference start trigger is also obtained when a recording start switch provided in the sound recording server 101 is depressed.

Upon start of the sound recording, the sound recording server 101 (control unit 1) acquires a recording start time, and the voice situation data creating section 4 stores the recording start time as a title of one voice situation data (S3).

The voice data analyzing section 2 restores voice files from sequentially acquired communication voice data, and records the voice files in the voice file recording section 51 of the recording section 5 (S4).

At this time, the voice data analyzing section 2 acquires device data from the acquired communication voice data, and supplies the device data to the storage section 5. In accordance with the supplied device data, the storage section 5 sequentially records the voice files in the voice file recording section 51 on a device basis. Since the voice conference devices 111, 112 concurrently output voice files to the network, the recording server 101 is configured to be able to execute multi-task processing to simultaneously store these voice files.

The voice data analyzing section 2 acquires device data, direction data, and picked-up sound time data from the communication voice data, and supplies them to the direction/talker identifying section 3 (S5).

The direction/talker identifying section 3 observes a change in direction data which are input in sequence. When it is detected that the direction data represents a single-direction and the direction data remains unchanged over a predetermined time period, the direction data which is single-direction data is supplied as talker identification data to the voice situation data creating section 4 (S6 → S7). At this time, the talker identification data comprised of single-direction data is supplied in a state associated with part of the corresponding voice file to the voice situation data creating section 4.

For example, as shown in FIG. 6A, in a case that the talker A at the location a continuously talks, the direction data Dir11 is recognized based on single-direction data, and the direction data Dir11 is supplied as talker identification data to the voice situation data creating section 4.

When determining that the direction data is not the single-direction data (single-direction with a time based-variation), the direction/talker identifying section 3 determines whether or not there are a plurality of direction data corresponding to the voice file. When determining that combination direction data is comprised of the same combination and remains unchanged over a predetermined time period, the direction/talker identifying section 3 supplies, as talker identification data, the combination direction data to the voice situation data creating section 4 (S6 → S8 → S10). Also at this time, the talker identification data comprised of the combination direction data is supplied in a state associated with part of the corresponding voice file to the voice situation data creating section 4.

In a case, for example as shown in FIG. 6B, that the talkers A, E at the location a continuously simultaneously talk, a combination of direction data Dir11 and Dir18 is recognized based on the combination direction data, and the combination of direction data Dir11 and Dir18 is supplied as talker identification data to the voice situation data creating section 4.

When detecting that, unlike the above described two cases, the direction data varies during the predetermined time period, the direction/talker identifying section 3 reads the talker's voice DB 53 and performs talker identification. Specifically, when talker identification processing is selected, the direction/talker identifying section 3 causes the voice data analyzing section 2 to analyze the acquired voice file, and acquires voice feature value data (formant or the like) in the voice file. The direction/talker identifying section 3 compares the analyzed and acquired voice feature value data with pieces of voice feature value data Sc recorded in the talker's voice DB 53, and if there is voice feature value data Sc coincident therewith, selects talker name data Si corresponding to the voice feature value data Sc. The direction/talker identifying section 3 supplies, as talker identification data, the selected talker name data Si to the voice situation data creating section 4 (S6 → S8 → S9 → S11). Also at this time, the talker identification data comprised of the talker name data Si is supplied in a state associated with part of the corresponding voice file to the voice situation data creating section 4.

In a case, for example as shown in FIG. 7, that the talker E at the location a talks while moving from the direction of Dir18 to the direction of Dir16, the direction data is not recognized as talker identification data, but the talker name data SiE obtained by the talker identification is supplied as talker identification data to the voice situation data creating section 4. Although the case where the single talker E moves has been described in this example, in a case that plural talkers move while talking, a combination of pieces of talker name data is supplied as talker identification data to the voice situation data creating section 4.

When determining that any of the above described cases is not held, the direction/talker identifying section 3 supplies, as talker identification data, direction undetection data to the voice situation data creating section 4 (S6 → S8 → S9 → S12).

The voice situation data creating section 4 associates talker identification data sequentially supplied from the direction/talker identifying section 3 with respective corresponding ones of the voice files, thereby creating voice situation data of a form in which data are arranged in time series. Then, the voice situation data creating section 4 records the voice situation data in the voice situation data recording section 52 of the recording section 5 (S13).

The above described direction/talker identification, the processing for creating and recording the voice situation data, and the processing for recording the voice files are repeated until a recording end trigger is detected S14 → S4).

When the recording end trigger is detected, the control unit 1 performs recording end processing (S14 → S15). The recording end trigger is obtained by detecting that a conference end switch in each of the voice conference devices 111, 112 connected to the network 100 is depressed, or power supply is turned off, or the like. The control unit 1 creates and records final voice situation data, creates grouping instruction data, and records the grouping instruction data into the voice situation data recording section 52. In accordance with the grouping instruction data, the voice situation data recorded in the voice situation data recording section 52 are grouped based on titles acquired at the start of sound recording.

With the above described construction and processing, voice files which are continuous with time are recorded on a device basis into the voice file recording section 51, as shown in FIG. 8. At this time, the voice files are each segmented on a talker identification data basis. The talker identification data are in the voice situation data recorded in the voice situation data recording section 52. Specifically, each voice file is segmented based on the direction data, the talker name data, and the direction undetection data. In the following, respective segmented voice files will be referred to as the segmented voice data.

For example, the voice file at the location a is segmented into a voice file of a single-direction data comprised of any of direction data Dir11 to Dir18, a voice file of combination direction data comprised of a combination of plural ones among direction data Dir11 to Dir18, a voice file of talker name data comprised of any of talker name data SiA to SiE, a voice file of direction undetection data UnKnown, and a voice file corresponding to a silent part where there is no effective picked-up sound. Furthermore, each segmented voice file is associated with segment start time data. In the example shown in FIG. 8, the voice conference device 111 is utilized by five conference participants, but recorded direction data are four in number (Dir11, Dir12, Dir15 and Dir18), talker name data is one in number (SiE), and direction undetection data is one in number. Only these data are recorded in the voice situation data. Specifically, talker identification data relating to a talker who does not talk is not recorded in the voice situation data.

As described above, with the construction and processing of this embodiment, conference participants' voices can be recorded in a state reliably separated on a talker basis by direction (single-direction or combination direction), talker name, and direction undetection information indicating that there is a voice for which direction and talker's name are unknown.

The talker identification process can be executed simpler and faster when talker identification data is generated by using direction data which is a talker identification element and contained in the communication voice data than when the talker identification data is generated by analyzing a voice feature value and comparing the analyzed value with a database. Thus, the talker identification data can be created faster and realtime identification performance can be improved by using the construction of this embodiment than by using the conventional method that performs identification based only on voice feature values.

Since time data indicating elapsed time points during the conference are associated with segmented voice files relating to respective voices, it is possible to record a minutes including a conference progress situation on each conference participant and each location. As a result, in the case of performing the below-described conference minutes preparation process, conference recording data convenient for the minutes preparer can be provided.

Next, a description will be given of the construction and processing at the time of conference minutes preparation.

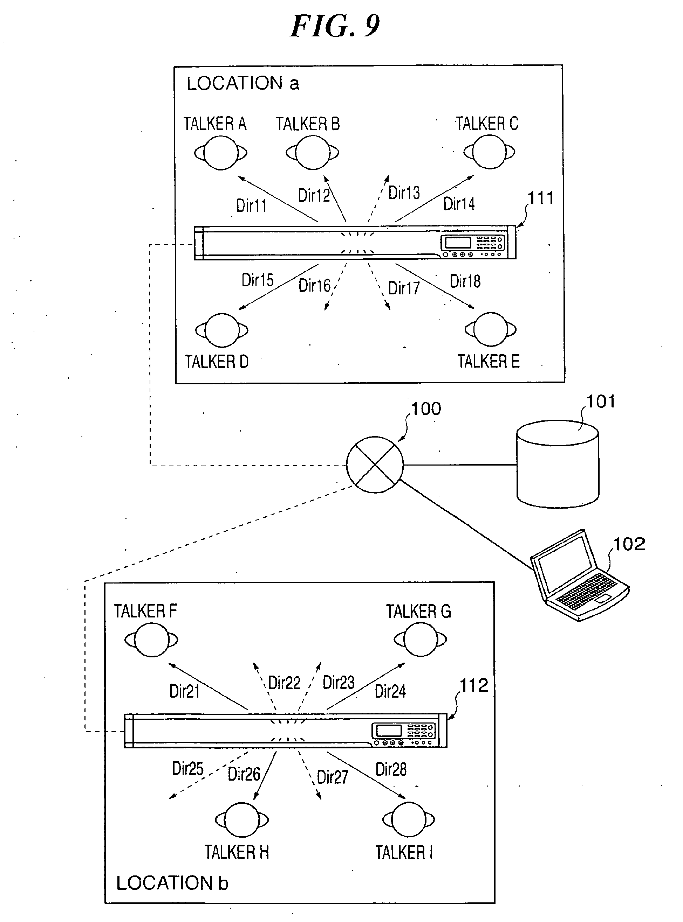

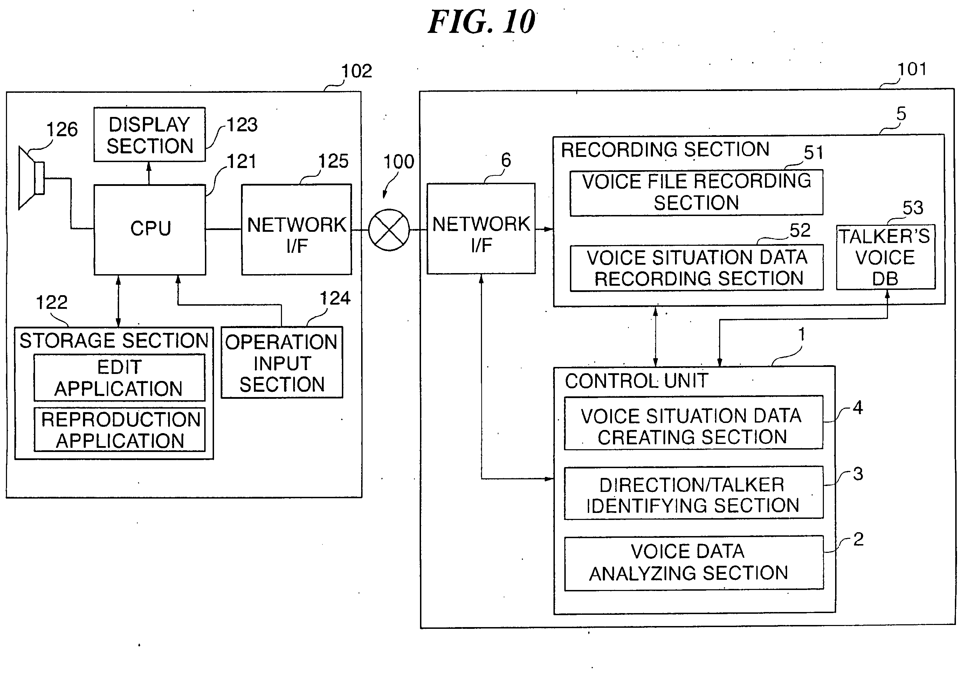

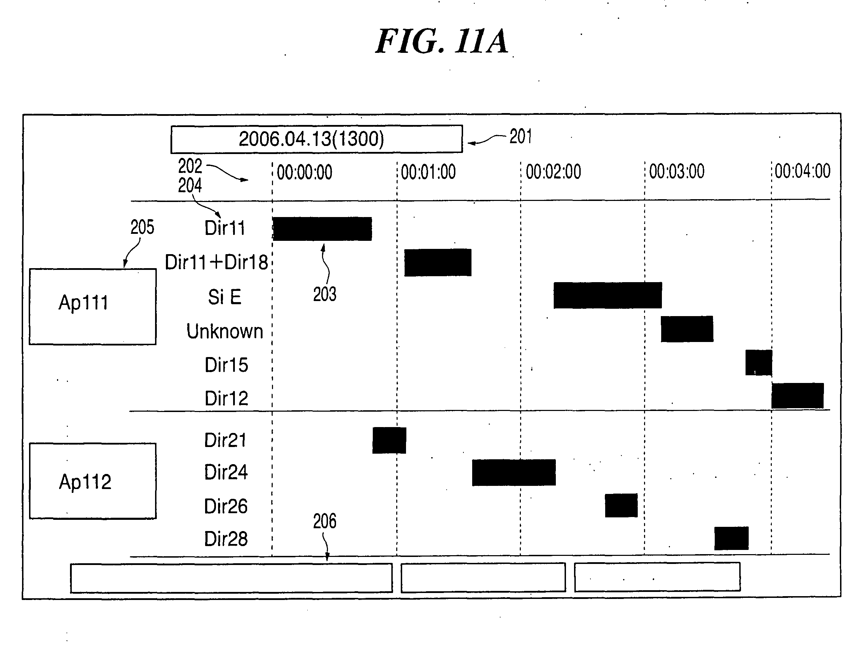

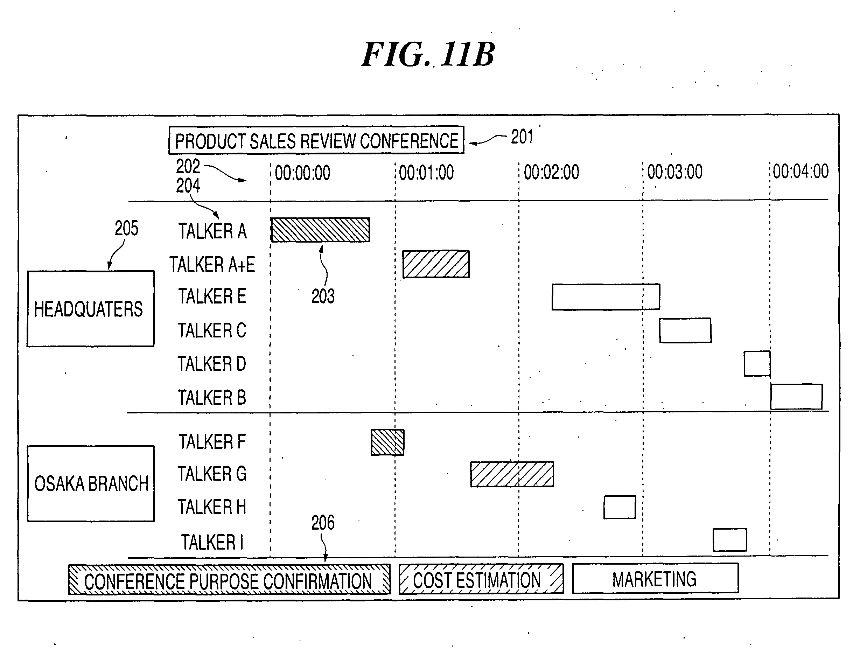

FIG. 9 is a structural view of the voice communication system at the time of conference minutes preparation. FIG. 10 is a block diagram showing the primary construction of the sound recording server and the personal computer 102 in FIG. 9. FIG. 11A is a view showing an example of an initial display image displayed on the display section 123 of the personal computer 102 at execution of the edit application, and FIG. 11B is a view showing an example of an edited display image.

As shown in FIG. 9, at the time of conference minutes preparation, the minutes preparer connects the personal computer 102 to the network 100. At this time, the sound recording server 101 which is in an ON state is connected to the network 100, but the voice conference devices 111, 112 are not connected to the network 100. It should be noted that the voice conference devices 111, 112 may be connected to the network 100, but such connection does not produce any significant difference from when the devices are not connected since the connection does not relate to the conference minutes preparation process.

The personal computer 102 includes a CPU 121, a storage section 122 such as a hard disk, a display section 123, an operating input section 124, a network I/F 125, and a speaker 126.

The CPU 121 performs processing control performed by an ordinary personal computer, and reads and executes an edit application and a reproduction application stored in the storage section 122 to thereby function as display means for displaying the content of voice situation data in the form of a time chart, editing means for editing the voice situation data, and means for reproducing voice files.

The storage section 122 is comprised of a hard disk or other magnetic disk or a memory, stores the edit application and the reproduction application, and is used by the CPU 121 as a work section when the CPU 121 carries out various functions. It should be noted that the edit application in this embodiment includes a display application, but the display application can be separated from the edit application.

The display section 123 is comprised of a liquid crystal display. When the edit application is executed by the CPU 121, the display application in the edit application is started, and the display section 123 is supplied with display image information from the CPU 121, and displays an image as shown in FIG. 11A.

The operating input section 124 is comprised of a keyboard and a mouse, accepts an operation input by the user (minutes preparer), and supplies the operation input to the CPU 121. For example, when a cursor is moved with the mouse on the display screen and the mouse is clicked at an appropriate position, click information is provided to the CPU 121. The CPU 121 determines the content of operation input based on the click position and a click situation, and carries out predetermined edit/reproduction processing, described later.

The network I/F 125 serves as a function section for connecting the personal computer 102 with the network 100. Under communication control of the CPU 121, the network I/F 125 communicates a control signal from the CPU 121 and voice situation data and voice files from the sound recording server 101.

The speaker 126 emits sounds based on the voice files under the control of the CPU 121.

Next, a method for editing the voice situation data will be described in detail with reference to FIG. 11.

When the minutes preparer operates the personal computer 102 after the conference to execute the edit application, the personal computer 102 acquires the voice situation data from the sound recording server 101 and displays a screen shown in FIG. 11A.

As shown in FIG. 11A, the edit screen includes a title display section 201 and time chart display sections 202. The time chart display sections 202 include bar graphs 203 indicating the voice files, talker identification information display sections 204, device/location display sections 205, and content display sections 206.

### (1) Title display section 201

In an initial state, as shown in FIG. 11A, the year-month-date of record of the minutes corresponding to the file name of the voice situation file is displayed on the title display section 201. When the title display section 201 is selected by the minutes preparer with the mouse, the title display section 201 becomes editable. When the conference name "product sales review conference" is input by the minutes preparer via the keyboard or the like, the name "product sales review conference" is displayed on the title display section 201 as shown in FIG. 11B. Before completion of the edit application, the CPU 121 confirms whether or not this change should be validated, and if selection to validate the change is made, associates the title name "product sales review conference" with the voice situation file. At this time, the voice situation file name may directly be changed to "product sales review conference" and the changed name may be stored into the sound recording server 101. As a result, the title is changed from a mere representation of year-month-date to a concrete indication of the conference name, making it easy to subsequently recognize the minutes.

### (2) Time chart display sections 202

In accordance with information on segmentation obtained from the voice situation file, the time chart display section 202 arranges the segmented voice files in time series on a talker identification information basis, and displays the arranged segmented voice files in the form of bar graphs 203. In this case, the length of each bar graph 203 represents the time length of the corresponding segmented voice file. The talker identification information are displayed in the talker identification information display sections 204.

As shown in FIG. 11A, direction data (Dir11, Dir11+Dir18, Dir15, Dir12, Dir21, Dir24, Dir26 and Dir28), talker name data (SiE), and direction undetection data (UnKnown), which are obtained from the voice situation file, are displayed in their initial states in respective ones of the talker identification display sections 204. When any of the talker identification information display sections 204 is selected by the minute preparer with the mouse, the selected talker identification information display section 204 becomes editable.

When the minutes preparer performs an operation such as double-clicking on any of the segmented voice files with the mouse, the CPU 121 recognizes this operation, reads the corresponding segmented voice file from the sound recording server 101, and reproduces the segmented voice file. Reproduced sounds are emitted from the speaker 126 toward the minutes preparer. The minutes preparer hears the sounds and is thereby able to auditorily grasp a talker corresponding to the segmented voice file.

When the minutes preparer inputs, via the keyboard or the like, conference participants' (talkers') names respectively corresponding to talker identification data based on reproduced sounds, the talkers' names (talkers A to I) corresponding to the talker identification data are displayed in the talker identification information display sections 204, as shown in FIG. 11B. Before completion of the edit application, the CPU 121 confirms whether or not this change should be validated, and if selection to validate the change is made, replaces the talker identification data by the input talkers' names, and stores the talkers' names into the sound recording server 101. At this time, the talker identification data and the input talkers' names may be recorded in association with one another, whereby the segmented voice files can be identified according to the talkers' names, which are clearly understood in terms of names.

It should be noted that in the above described reproduction, when a talker identification data part of the talker identification information display sections 204 is double-clicked with the mouse, the CPU 121 recognizes this, and is able to read out from the sound recording server 101 and reproduce a segmented voice file corresponding to the talker identification data part of the selected talker identification information display sections 204. With this method, talkers' names can also be identified. In addition, with this method, only the required talkers' voices can be extracted and catch, without inquiring the entire conference again.

As shown in FIG. 11A, device data (Ap111 and Ap112) obtained from the voice situation file are displayed in initial states on the device/location display sections 205. When the minutes preparer selects any of the device/location display sections 205 with the mouse, the device/location display section 205 becomes editable. When the minutes preparer inputs, via the keyboard or the like, locations where respective devices are installed, location names ("Headquaters" and "Osaka branch") are displayed on the device display section 205 as shown in FIG. 11B. Before completion of the edit application, the CPU 121 confirms whether or not this change should be validated, and if selection to validate the change is made, associates the locations with the corresponding device data. In this case, the device data may directly be replaced by the location name data, and the location name data may be stored in the sound recording server 101, thereby making it easy to subsequently recognize the locations between which the conference was held.

As shown in FIG. 11A, in an initial state, only frames are displayed in the content display sections 206. When the minutes preparer selects any of the content display sections 206 with the mouse, the content display section 206 becomes editable. When the minutes preparer inputs contents of conference using the keyboard or the like, the contents of conference ("conference purpose confirmation", "cost estimation" and "marketing") are displayed in the content display sections 206 as shown in FIG. 11B. At this time, the respective content display sections 206 are displayed in different colors or different patterns. In a state that any of the content display sections 206 is selected, when bar graphs 203 of segmented voice files are selected, these selected bar graphs are associated and displayed in the same color or pattern as that of the selected content display section 206. Before completion of the edit application, the CPU 121 confirms whether or not this change should be validated, and if selection to validate the change is made, stores the contents of conference in association with the corresponding content display sections 206, and stores segmented voice files and the contents of conference in association with one another. It should be noted that these information are added to the voice situation file. As a result, it becomes easy to identify the contents of the segmented voice files.

After completion of the association, when any of the content display sections 206 is double-clicked with the mouse, the CPU 121 recognizes this, and reads out the segmented voice files associated with the selected content display section 206 from the sound recording server 101, and reproduces the same. As a result, only the required content parts can be extracted and catch, without inquiring the entire conference again.

With the above construction and processing, more understandable minutes can easily be prepared, and only the required conference parts can easily be caught again.

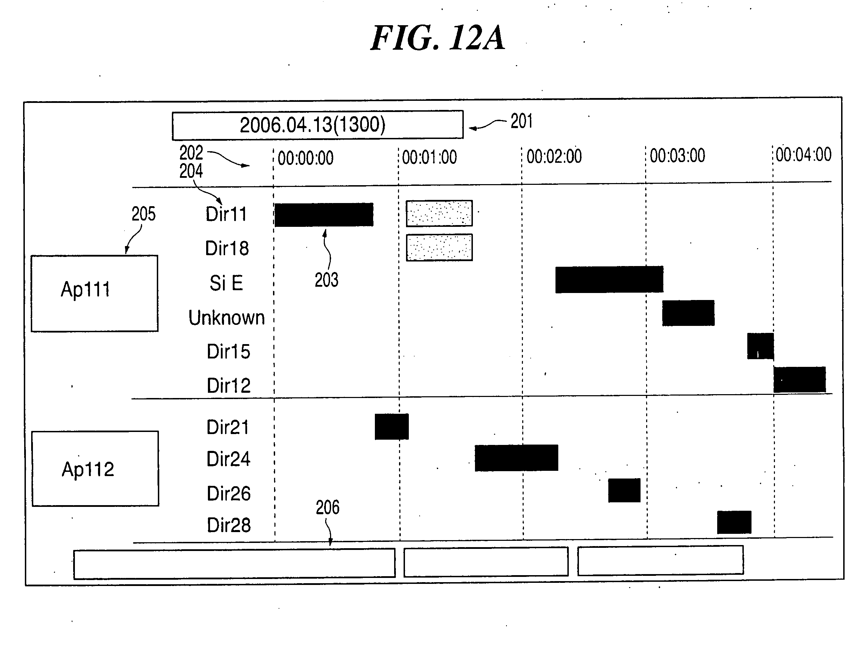

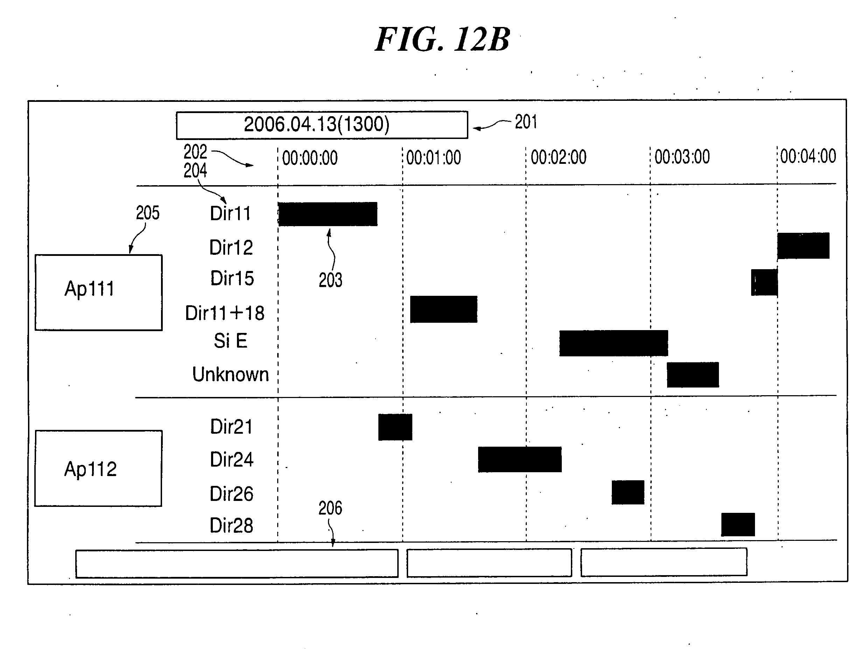

The initial display pattern of minutes is not limited to the pattern shown in FIG. 11A, but may be patterns shown in FIGS. 12A and 12B or a pattern obtained by combining FIGS. 12A and 12B together.

FIGS. 12A and 12B are views showing other examples of an initial display image at the time of execution of the edit application.

In the method shown in FIG. 11A, talker identification data are arranged and displayed irrespective of whichever the direction is a single-direction or a combination direction. However, as shown in FIG. 12A, a combination direction may be divided into directions and displayed by bar graphs 203. Alternatively, as shown in FIG. 12B, the bar graphs 203 may be displayed, while giving talker identification data with a higher priority in display order.

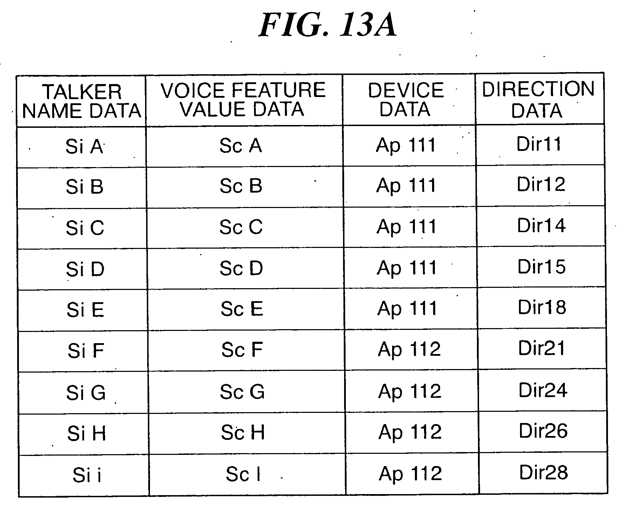

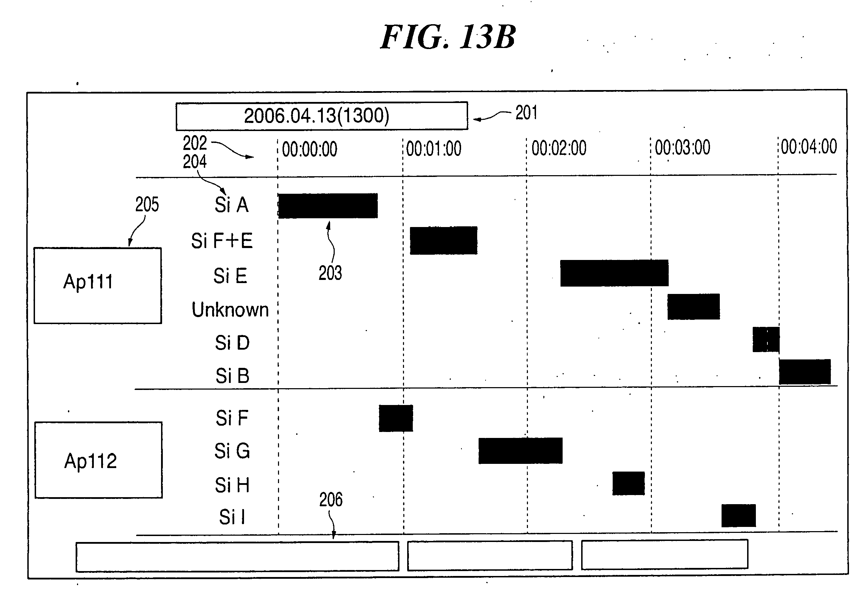

Direction data may be added to the talker's voice DB 53 as shown in FIG. 13A, whereby talker identification information can be displayed according to only talkers' names even in an initial stage, as shown in FIG. 13B.

FIG. 13A is a schematic view showing the construction of the talker's voice DB 53 including direction data, and FIG. 13B is a view showing an example of an editing screen in the case of using the talker's voice DB shown in FIG. 13A.

As shown in FIG. 13A, talker name data SiA to SiI, voice feature value data ScA to ScI, and device data Ap111, Ap112 are recorded in the talker's voice DB 53, and direction data Dir11, Dir12, Dir14, Dir15, Dir18, Dir21, Dir24, Dir26 and Dir28 corresponding to respective ones of the talker name data SiA to SiI are recorded in association with the talker name data SiA to SiI.

The association between the talker name data Si and the direction data Dir can be realized by recording conference participants' voices individually spoken by the conference participants and by recording seat positions (directions) before the conference. The association can also be realized by the voice analyzing section of the sound recording server 101 by automatically detecting relations between the talker name data Si and the direction data Dir in sequence during the conference and by renewing and recording the talker's voice DB 53.

When the edit application is executed, the CPU 121 of the personal computer 102 reads out talker identification data from the voice situation data and also reads out the talker's voice DB 53 shown in FIG. 13A, and replaces the direction data Dir by talker name data Si. Then, the talker name data Si are displayed in the talker identification information display sections 204, as shown in FIG. 13B. With this method, data other than the direction undetection data are displayed according to talkers' names, whereby a minutes edit screen can be displayed in a way convenient for the minutes preparer to find talkers. The processing to convert the direction data Dir into the talker name data Si is not limited to being performed at the time of edit, but may be made at the time of creation of voice situation data.

It should be noted that the case where the sound recording server 101 is network-connected with the personal computer 102 that functions as both the voice situation file display/edit device and the voice file reproducing device has been described in the above, the personal computer 102 may be configured to incorporate the sound recording server 101.

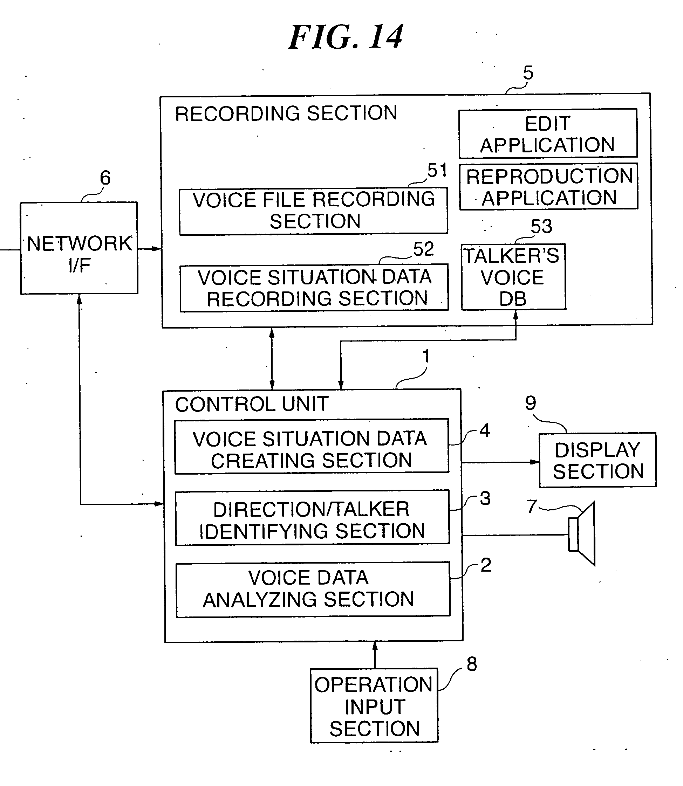

FIG. 14 is a block diagram showing the primary construction of the personal computer additionally functioning as a sound recording server.

As shown in FIG. 14, the personal computer additionally serving as the sound recording server includes a control unit (CPU) 1 having a voice data analyzing section 2, a direction/talker identifying section 3, and a voice situation data creating section 4, and further includes a recording section 5, a network I/F 6, a speaker 7, an operating input section 8, and a display section 9. The recording section 5 serves as both a recording section of the sound recording server (recording section 5 in FIG. 3) and a storage section for storing applications implemented by the personal computer (storage section 122 in FIG. 10). The network I/F 6 serves as both a network I/F of the sound recording server (network I/F 6 in FIG. 3) and a network I/F of the personal computer (network I/F 125 in FIG. 10). The control unit 1 is a control unit (CPU) of the personal computer and also functions as a control unit of the sound recording server. The speaker 7, the operating input section 8, and the display section 9 are the same as the speaker 126, the operating input section 124, and the display section 123 of the above described personal computer 102.

With this construction, it is possible to unify the sound recording server (device for recording voice files and generating and recording a voice situation file), the device for visualizing a voice situation (a talking situation in a conference), the voice situation data editing device, and the voice file reproducing device. The recording section may be a magnetic recording device incorporated in the personal computer or may be any external recording device.

In the above, the example has been described where the sound recording server 101 and the voice conference devices 111, 112 are separately configured from each other. However, the sound recording server may be incorporated in any at least one of the voice conference devices connected to the network 100.

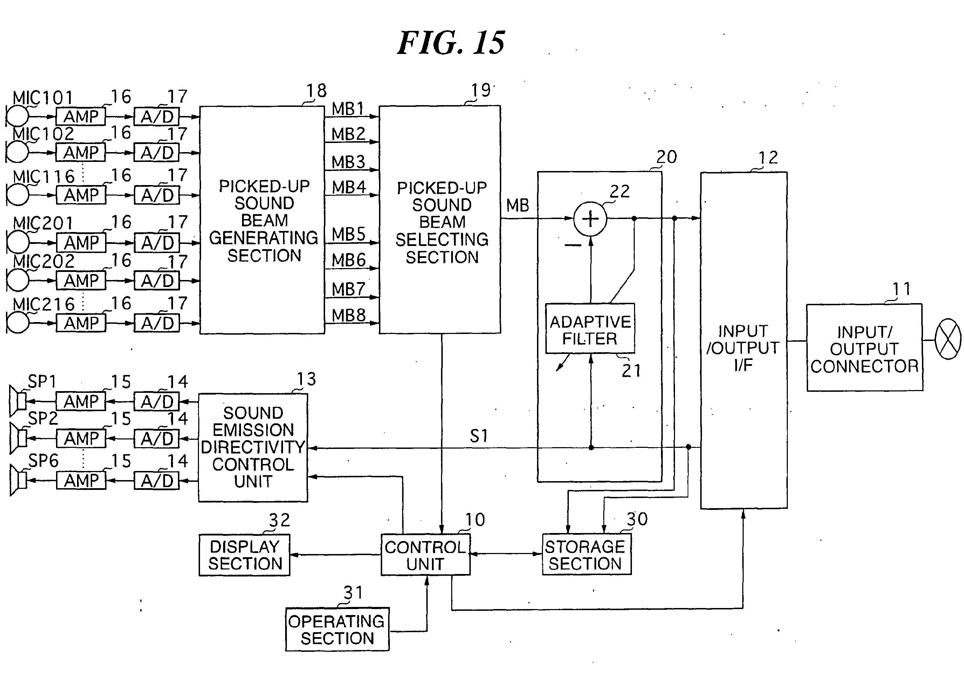

FIG. 15 is a block diagram showing the construction of a voice conference device in which a sound recording server is incorporated.

As shown in FIG. 15, the voice conference device incorporating the sound recording server includes the arrangement shown in FIG. 2 and a storage section 30 added thereto.

The storage section 30 inputs a picked-up sound beam voice signal MB from the echo cancellation circuit 20 and an input voice signal from the input/output I/F 12. The storage section 30 stores them as voice files. When the picked-up sound beam voice signal is input to the storage section 30, the control unit 10 stores the signal along with the own device data, direction data obtained from the picked-up sound beam selecting section 19, and picked-up sound time data, which are attached to the picked-up sound beam voice signals. The control unit 10 also performs the above described direction/talker identification to generate voice situation data, and stores the generated data in the storage section 30. When the input voice signal is input to the storage section 30, the control unit 10 acquires from the input/output I/F 12 device data indicating the receiving side device, direction data and picked-up sound time data attached to the input voice signals, performs the direction/talker identification, and renews voice situation data in the storage section 30. At this time, voice situation data is generated and stored, if the voice situation data is not generated and stored as yet.

With this construction, it is unnecessary to separately provide the sound recording server, and therefore the conference minutes preparation system can be realized with a more simplified construction. The storage section may not be provided in only one of the voice conference devices connected to the network, but may be provided in plural devices.

The storage section provided in the voice conference device is limited in size, and therefore the storage section may be provided in the voice conference device, and the sound recording server may be provided separately. In this case, the voice files and the voice situation data may be stored into the storage section of the voice conference device as long as the storage thereto can be made, and may be transferred to the sound recording server when and after the storage up to the capacity of the storage section is performed.

In the above, the case has been described where the multipoint conference is held between plural voice conference devices connected to the network. However, even in a case that only a single voice conference device is used, similar functions and advantages can be attained by simultaneously detecting a picked-up voice signal and a direction and associating them with each other.

In the above, the description has been given by taking the conference minutes preparation as an example. Similar functions and advantages can also be attained in a case where other communication voices between multipoints are recorded by the devices (system).

### Industrial applicability

According to the present invention, data, in which voice data from a plurality of sound sources are recorded in time series for utilization, can be generated and provided with relatively simple processing in a way convenient for the user. As a concrete example, in a case that conference participants' talkings are recorded by a multipoint conference system, the conference participants' talkings can be provided to a minutes preparer in a more understandable form such as in the form of a time chart.

According to the present invention, the voice communication system and the recording of voice data communicated in the system can be realized with a construction simpler than the conventional construction by using the sound emission/pickup devices for automatically detecting talker directions based on picked-up sound signals.

## Claims

1. A voice situation data creating device comprising:
data acquisition means for acquiring in time series voice data and direction data that represents a direction of arrival of the voice data;
a talker's voice feature database storing voice feature values of respective talkers;
direction/talker identifying means for setting the direction data, which is single-direction data, in talker identification data when the acquired direction data indicates a single direction and remains unchanged for a predetermined time period, said direction/talker identifying means being for setting the direction data, which is combination direction data, in the talker identification data when the direction data indicates a same combination of plural directions and remains unchanged for a predetermined time period,
said direction/talker identifying means being for extracting a voice feature value from the voice data and comparing the extracted voice feature value with the voice feature values to thereby perform talker identification when the talker identification data is neither the single-direction data nor the combination direction data and for setting, if a talker is identified, talker name data corresponding to the identified talker in the talker identification data and for setting, if a talker is not identified, direction undetection data in the talker identification data;
voice situation data creating means for creating voice situation data by analyzing a time distribution of a result of determination on the talker identification data; and
storage means for storing the voice data and the voice situation data.

2. The voice situation data creating device according to claim 1, wherein said direction/talker identifying means renews, as needed, the talker's voice feature database based on a voice feature value obtained from a talker's voice which is input during communication.

3. A voice situation visualizing device comprising:
the voice situation data creating device as set forth in claim 1; and
display means for graphically representing the time distribution of the voice data in time series on a talker basis based on the voice situation data and for displaying the graphically represented time distribution.

4. A voice situation data editing device comprising:
the voice situation visualizing device as set forth in claim 3;
operation acceptance means for accepting an operation input for editing the voice situation data; and
data edit means for analyzing a content of edit accepted by said operation acceptance means and editing the voice situation data.

5. A voice data reproducing device comprising:
the voice situation data editing device as set forth in claim 4; and
reproducing means for selecting and reproducing talker voice data selected by said operation acceptance means from all voice data.

6. A voice communication system including a plurality of sound emission/pickup devices for communicating voice data therebetween via a network, wherein:
any of the voice situation data creating device as set forth in claim 1, the voice situation visualizing device as set forth in claim 3, the voice situation data editing device as set forth in claim 4, and the voice data reproducing device in claim 5 is separate from the plurality of sound emission/pickup devices and is connected to the network, and
said data acquisition means acquires voice data and direction data which are communicated between the plurality of sound emission/pickup devices.

7. A voice communication system including a plurality of sound emission/pickup devices for communicating voice data therebetween via a network, wherein:
any of the voice situation data creating device as set forth in claim 1, the voice situation visualizing device as set forth in claim 3, the voice situation data editing device as set forth in claim 4, and the voice data reproducing device as set forth in claim 5 is incorporated in any of the plurality of sound emission/pickup devices, and
said data acquisition means acquires voice data and direction data which are transmitted to and received by the sound emission/pickup device that incorporates a voice data processing device.

8. The voice communication system according to claim 6, wherein said sound emission/pickup device includes a microphone array, generates a plurality of picked-up sound beam signals having strong directivities in different directions based on voice signals picked up by microphones of the microphone array, compares the plurality of picked-up sound beam signals with one another to select the picked-up sound beam signal having a highest signal intensity, detects a direction corresponding to the selected picked-up sound beam signal, and outputs the selected picked-up sound beam signal and the detected direction respectively as voice data and direction data.
